# EUROPEAN PATENT APPLICATION

(11) **EP 3 689 806 A1**
(43) Date of publication of application: **05.08.2020**
(21) Application number: 19155079.7
(22) Date of filing: 01.02.2019
(51) Int. Cl.: B66C 1/10

(54) **A WIND TURBINE AND A METHOD FOR TRANSPORTING CARGO INSIDE A WIND TURBINE**

(71) Applicant: Siemens Gamesa Renewable Energy A/S, 7330 Brande (DK)
(72) Inventor: Munk-Hansen, Thorkil, 7000 Fredericia (DK); Rumler, Malte Herbert, 49497 Mettingen (DK); Tiwari, Madhup, 122017 Gurgaon, Haryana (IN); Uppal, Naveen, 110018 New Delhi (IN)
(74) Representative: Aspacher, Karl-Georg

(57) **Abstract**

A wind turbine (1) comprising: a tower (2), a nacelle (3) mounted on top of the tower (2), a lift landing platform (7) mounted inside the tower (2), a lift (8) configured to lift cargo (9) to the lift landing platform (7), a hoisting device (13) mounted to the nacelle (3) and configured to hoist cargo (9) lifted to the lift landing platform (7) into the nacelle (3), and guiding means (14) configured to limit a lateral movement (L) of the cargo (9) when hoisted.

Damage to the wind turbine or the cargo itself can thus be avoided.

## Description

The present invention relates to a wind turbine and a method for transporting cargo inside a wind turbine.

Conventionally, working areas in wind turbines are accessed either by climbing a ladder or by using a service lift which usually ends on a lift landing platform. Both ways of accessing do not allow carrying of heavy components or tools which may be needed in the nacelle of the wind turbine.

EP 2 520 533 A1 describes a service crane for a wind turbine which is mounted to the nacelle and capable of lifting a load from an outside helihoist platform to the inside of the nacelle as well as from a position inside the tower of the wind turbine to the nacelle. Regardless of whether the load is lifted outside or inside the wind turbine, problems may occur due to the wind turbine being exposed to rough weather conditions that may cause the tower to swing. Particularly during repair work in winter time, high winds and stormy sea are common. Resulting swinging movements of the load may lead to potential damages to the load and/or the tower on collision.

It is one object of the present invention to provide an improved wind turbine which allows a safer lifting of cargo, and a corresponding method.

Accordingly, a wind turbine is provided. The wind turbine comprises a tower, a nacelle mounted on top of the tower, a lift landing platform mounted inside the tower, a lift configured to lift cargo to the lift landing platform, a hoisting device mounted to the nacelle and configured to hoist cargo lifted to the lift landing platform into the nacelle, and guiding means configured to limit a lateral movement of the cargo when hoisted.

The wind turbine is advantageous in that even heavy cargo may be safely transported into the nacelle of the wind turbine, thereby utilizing the lift as an existing infrastructure. The cargo lifting corridor or shaft which is created by using guiding means allows a practical use and does not compromise the safety of people working inside the wind turbine. Due to the use of guiding means, the cargo is prevented from swinging during hoisting even if the wind turbine tower is exposed to rough weather conditions and might swing. Hence, damage to the wind turbine or the cargo itself can be avoided.

"Lateral movement" herein means a movement at right angles (including deviations therefrom of up to 10 or 20 degrees) to the tower's vertical axis.

"Limit" is to say that a stop is provided which the cargo comes to lie against when swinging or tending to swing when the tower is excited, for example, by strong winds.

The wind turbine may be configured as an offshore wind turbine.

A wind turbine herein is a device configured to convert the wind's kinetic energy into electrical energy.

According to an embodiment, the guiding means comprise a housing with an open bottom and open top.

An open bottom and an open top means that cargo can vertically pass through the guiding means. "Housing" is to say that there are one or more side walls limiting the lateral movement of the cargo. For example, a housing configured as a tube (e.g. made of metal) may be used. The tube may have a circular cross-section, thus having a single side wall.

According to an embodiment, the housing may have three or four side walls.

The side walls may be arranged adjoining each other to create a closed border along a circumferential line around the vertical direction when seen in a top view of the tower.

According to an embodiment, the housing may also be made of struts, panels and/or a mesh.

In particular, the one or more side walls may be formed as struts, panels and/or a mesh. Panels or other closed structures are advantageous in that they are rigid. Struts, a mesh or other open structures are advantageous in that they are lightweight and, to some extent, see-through.

According to a further embodiment, the wind turbine comprises at least one further platform arranged between the nacelle and the lift landing platform, wherein the at least one further platform has an opening through which the cargo passes when hoisted.

The opening may be formed as a circular or rectangular opening, for example. The opening will typically cover not more than 30% of the surface area of the platform itself. Possible diameters of such an opening are larger than 1m and smaller than 3m.

According to a further embodiment, the guiding means are arranged at the lift landing platform and/or the at least one further platform.

For example, the guiding means are fastened to the lift landing platform and/or the at least one further platform. Suitable fasteners may include bolts.

According to a further embodiment, the guiding means are arranged above or below the at least one further platform.

Arranging guiding means below a platform has the advantage that the working area in which people move is less affected. Arranging guiding means above a platform has benefits in terms of an easier installation.

According to a further embodiment, the guiding means are moveably arranged, at the at least one further platform, between a radially inward and a radially outward position.

This is particularly an advantage if the further platform is a yaw platform from which a step ladder reaches to the bed frame of the nacelle. Such a step ladder is typically connected to the bed frame, and thus rotates along with the nacelle as the nacelle rotates with respect to the tower Providing moveable guiding means allows to create a passage for the step ladder to rotate (with the nacelle) when not hoisting cargo, and to move the guiding means to be flush with the opening in the platform when hoisting cargo.

According to a further embodiment, a plate is provided which is configured to move along with the guiding means so as to cover a portion of the opening in the at least one further platform when the guiding means are in the radially outward position.

Providing such a plate serves to close an opening in the at least one further platform in case a hoisting of cargo is not performed and the guiding means are arranged in a radially outward position. Hence, the overall safety for persons working inside the wind turbine is increased.

According to a further embodiment, the lift is configured as a service lift and/or the lift is configured to lift the cargo from a landing platform of the wind turbine to the lift landing platform.

This is advantageous since many wind turbine already comprise a service lift which extends from the landing platform to the lift landing platform in the upper section of the wind turbine and hence, existing infrastructure is efficiently used. Such service lifts are typically elevators having a lift cage, a carriage or a cabin in which persons carrying out maintenance work are transported. Such lifts comprise, for example, a carriage with a friction drive as well as drive and safety wires reaching from a lift beam on the top section platform down to the lift landing platform. The friction drive frictionally engages the drive wires and pushes the carriage up or lowers it down in accordance with the desired travel direction of the carriage. The safety wires are engaged by a safety mechanism in an emergency situation, thus preventing the carriage from falling.

According to a further embodiment, the hoisting device comprises a hoist rope and a winch capable of reeling in and out the hoist rope for lifting or lowering the cargo. Therein, the hoist rope passes through a hatch of the bed frame as well as through openings in the further platform between nacelle and lift landing platform.

According to a further embodiment, the nacelle comprises a bed frame having a hatch through which the cargo passes when hoisted, wherein the bed frame together with the nacelle is configured to rotate relative to tower.

According to a further embodiment, the at least one further platform is a yaw platform arranged underneath the bed frame, the yaw platform being fastened to a tower adaptor and the tower adaptor being connected to the bed frame via yaw bearings allowing the rotation of the nacelle relative to the tower.

According to a further embodiment, the wind turbine comprises a first and a second further platform between the nacelle and the lift landing platform, each further platform comprising an opening for passing the cargo when hoisted, the first further platform, the second further platform and/or the lift landing platform having guiding means associated therewith, the or each guiding means being configured to limit a lateral movement of the cargo when hoisted.

According to a further embodiment, continuous guiding means are provided which extend across more than one platform and thus provide a continuous shaft in the vertical direction of the tower in which the cargo is hoisted. Alternatively, the guiding means are separate elements, wherein these elements are spaced apart with respect to one another in the vertical tower direction and form a shaft in sections.

According to a further aspect, the invention relates to a method for transporting cargo inside a wind turbine, the wind turbine having a nacelle mounted on top of a tower. The method comprises the steps of: lifting cargo to a lift landing platform inside the tower, hoisting the cargo lifted to the lift landing platform into the nacelle, and limiting, by guiding means, a lateral movement of the cargo during hoisting.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows, in partial cross-section, a wind turbine according to an embodiment;
- Fig. 2: shows schematically an enlarged view II from Fig. 1;
- Fig. 3: shows schematically an enlarged view III from Fig. 1;
- Fig. 4: shows, in a top view, a further platform according to an embodiment in a first state;
- Fig. 5: shows the platform of Fig. 4 in a perspective view;
- Fig. 6: shows, in a top view, the further platform of Fig. 4 in a second state;
- Fig. 7: shows the platform of Fig. 6 in a perspective view; and
- Fig. 8: shows a flowchart illustrating a method for transporting cargo inside a wind turbine according to an embodiment.

In the Figures, like reference numerals designate like or functionally equivalent elements, unless otherwise indicated.

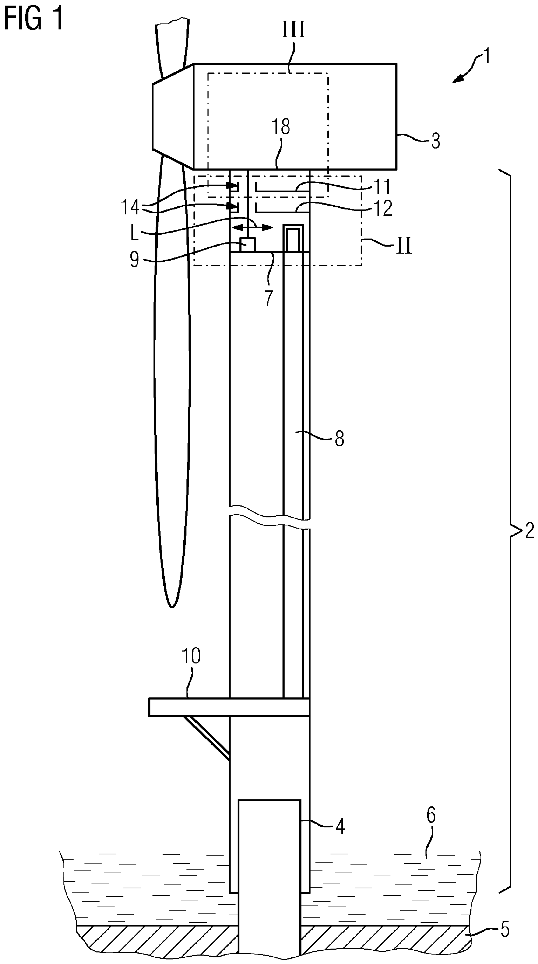

Fig. 1 shows a wind turbine according to an embodiment.

The wind turbine 1 comprises a tower 2 and a nacelle 3 which is arranged at the upper end of the tower 2 of the wind turbine 1. The tower 2 is arranged on a monopile 4 which is driven into the sea bed 5 and surrounded by sea water 6.

The wind turbine 1 further comprises a lift landing platform 7 which is mounted inside the tower 2. A lift 8 is configured to lift cargo 9 from a landing platform 10 to the lift landing platform 7, wherein the cargo 9 has been delivered to the landing platform 10 before, usually by means of a vessel.

According to the embodiment of Fig. 1, the wind turbine 1 comprises a further platform 11 which is a yaw platform and another further platform 12 which is a top section platform, wherein these platforms 11 and 12 are both arranged between the lift landing platform 7 and a bed frame 18 of the nacelle 3. In order to be able to hoist the cargo 9 which has been lifted to the lift landing platform 7 into the nacelle 3, a hoisting device 13 is mounted to the nacelle 3.

In order to limit a lateral movement of cargo 9 being hoisted by the hoisting device 13, guiding means 14 are arranged at the further platforms 11 and 12.

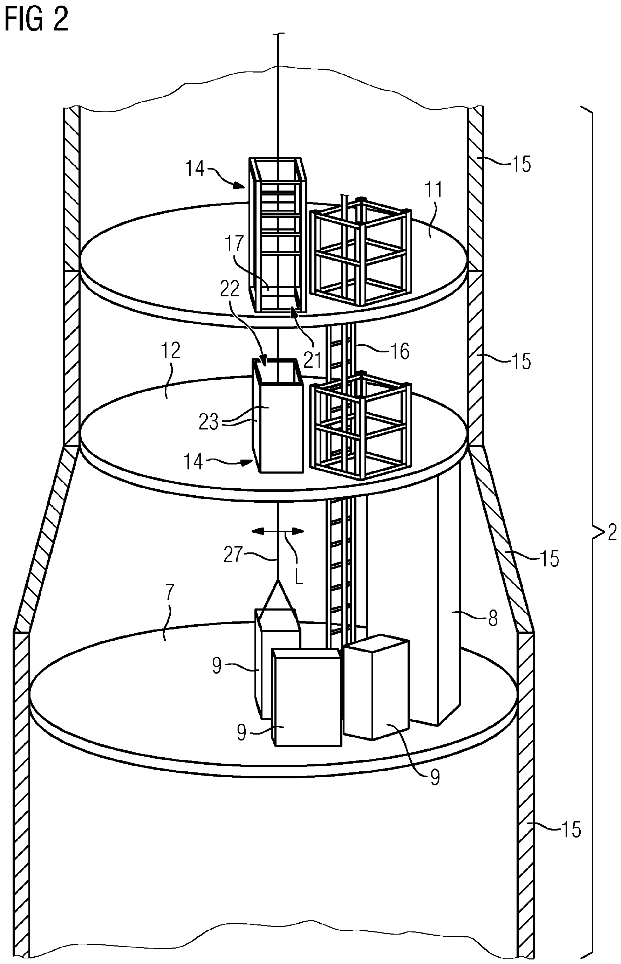

Fig. 2 shows a detailed view II of an upper position of the tower 2 from Fig. 1 extending from the lift landing platform 7 to the further platform 11.

As can be seen in Fig. 2, the tower 2 has a tapered shape since the diameter of the lift landing platform 7 is greater than the diameter of the further platforms 11 and 12. Accordingly, walls 15 of the tower 2 extending from the lift landing platform 7 to the further platform 12 are inclined. The wind turbine 1 further comprises a ladder 16 which allows persons climbing up inside the wind turbine 1 up to the further platforms 11 and 12 from the lift landing platform 7.

As described before, the wind turbine 1 comprises a lift 8 which is configured to lift cargo 9 to the lift landing platform 7. Each of the further platforms 11 and 12 comprises an opening 17 which allows passage of the cargo 9 when hoisted. Moreover, a bed frame 18 which represents the bottom of the nacelle 3 also comprises an opening in the shape of a hatch 19.

Moreover, guiding means 14 are provided at each of the further platforms 11 and 12 which limit a lateral movement L of the cargo 9 when hoisted.

The guiding means 14 which are arranged at further platform 12 comprise a housing 20 with an open bottom 21 and an open top 22, wherein the housing 20 has four side walls made of metal panels 23. Accordingly, a lateral movement L of cargo 9 being hoisted is limited due to the side walls restricting movement of cargo 9 even during rough weather conditions which would cause the wind turbine to swing. This means that the cargo 9 cannot swing further than allowed by the metal panels 23 of the side walls of the housing 20.

The guiding means 14 which are arranged at further platform 11 comprise a housing 20 with four side walls made of struts 24. Hence, it may be recognized what kind of cargo 9 is hoisted. A lateral movement of the cargo 9 is nevertheless limited since the struts 24 are positioned close to the opening 17 in the further platform 11 through which the cargo 9 passes.

In addition to that, guiding means 14 may also be provided at the bed frame 18 of the nacelle 3 and/or at the lift landing platform 7 (both not shown).

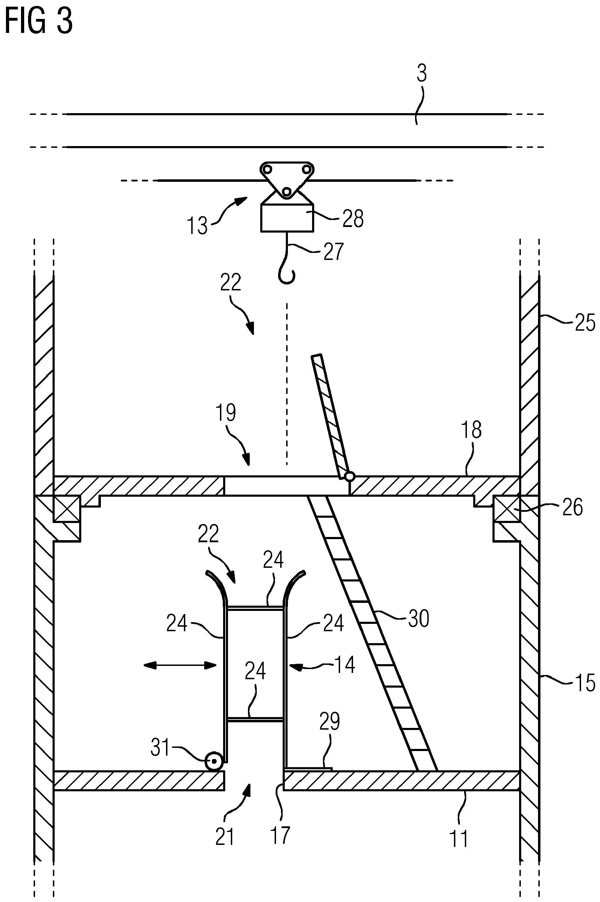

Fig. 3 shows a detailed view III of an upper section of the tower 2 from Fig. 1 depicting a section which extends from the further platform 11 to the top of the nacelle 3.

According to the embodiment of Fig. 3, the further platform 11 is a yaw platform which is arranged underneath the bed frame 18 of the nacelle 3 and fastened to a tower adaptor 25 which is connected to the bed frame 18 via yaw bearings 26 allowing the rotation of the nacelle 3 relative to the tower 2.

The hoisting device 13 which is mounted to the nacelle 3 and configured to hoist cargo 9 into the nacelle 3, comprises a hoist rope 27 and a winch 28. By operating the hoisting device 13, cargo 9 can be lifted from the lift landing platform 7 into the nacelle 3, thereby passing through an opening 17 in the further platform 11 and through a hatch 19 in the bed frame 18 of the nacelle.

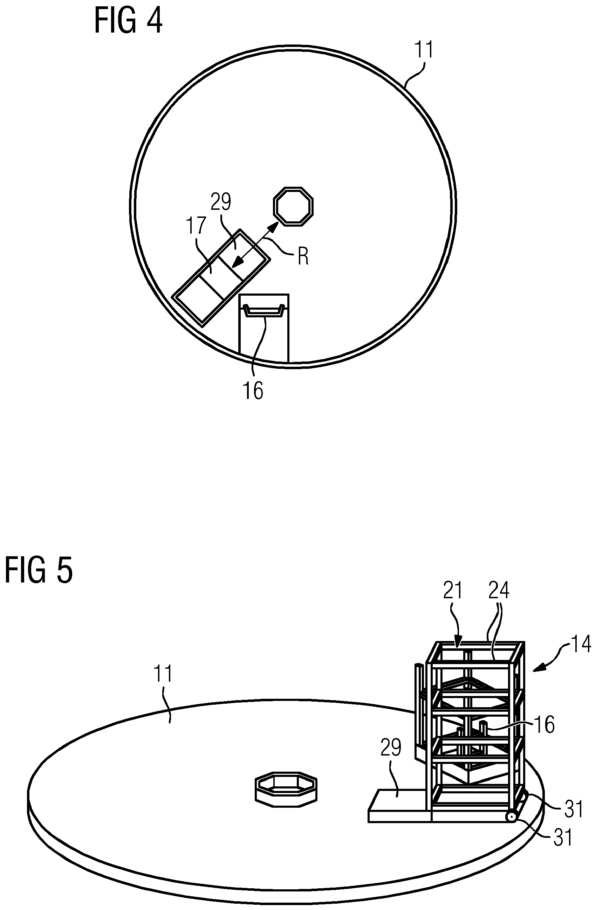

As the space to move on the further platform 11 is limited, the guiding means 14 are moveably arranged between a radially inward and a radially outward position which is indicated by a double arrow and will be explained in more detail with reference to subsequent Figs. 4 to 7.

Fig. 4 shows in a top view, and Fig. 5 in a perspective view, a further platform 11 according to an embodiment in a first state in which cargo 9 cannot pass the opening 17 of the further platform 11 during hoisting.

As can be seen in the perspective view of Fig. 5, the guiding means 14 are located at a radially outward position of the further platform 11. According to this embodiment, a plate 29 is provided which is configured to move along with the guiding means 14, thus enabling a translational movement. The plate 29 may be connected to one of the lower horizontally arranged struts 24, for example. Hence, a portion of the opening 17 in the at least one further platform 11 is covered when the guiding means 14 are in the radially outward position. A movement of the guiding means 14 and the plate 29 may be achieved using rails arranged at the bottom of the further platform 11, a sliding pad and/or wheels 31 or the like. Alternatively, the guiding means and the plate may also be rotatably arranged on the further platform 11.

As the guiding means 14 and the plate 29 are connected to each other, moving the guiding means 14 into the radial direction R will also cause the plate 29 to move into this direction. The guiding means 14 can therefore be kept at a radially outward position while partially covering the opening 17 which leads to more operating space for persons staying on the further platform 11. In order to prevent the guiding means 14 and the plate 29 to be accidentally moved towards the radially inward position of the further platform 11, locking means may be provided at the rails, the sliding pad and/or the wheels 31 to securely keep the opening 17 partially covered.

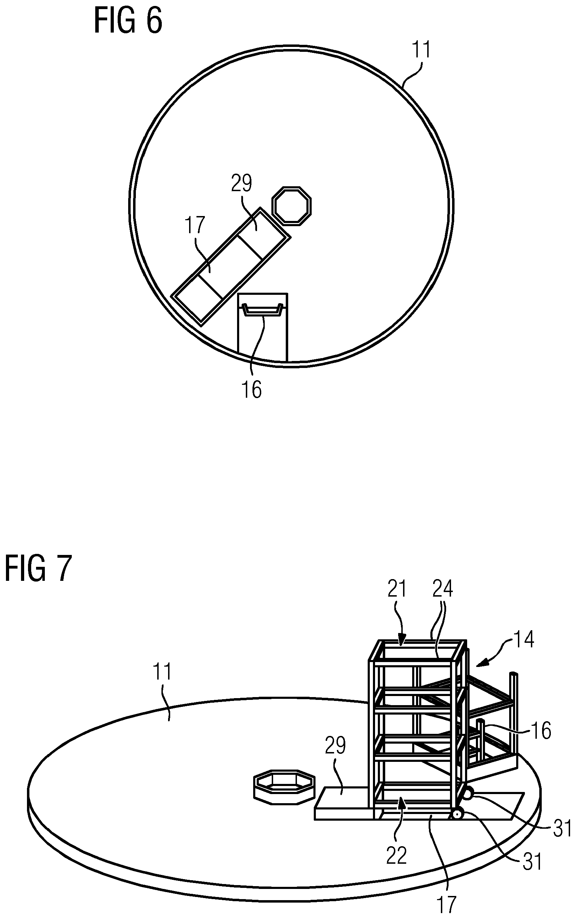

Fig. 6 shows in a top view, and Fig. 7 in a perspective view, the further platform 11 of Figs. 4 and 5 in a second state in which cargo 9 may pass the opening 17 of the further platform 11 during hoisting.

As can be seen in the perspective view of Fig. 7, the guiding means 14 are located at a radially inward position of the further platform 11. The plate 29 which is configured to move along with the guiding means 14 have been moved to the inward position together with the guiding means 14 and thus, the opening 17 is not partially covered any more by the plate 29.

Providing an arrangement as explained with reference to Figs. 4 to 7 is particularly advantageous in case a step ladder 30 (as shown in Fig. 3) is rotatably attached to the bed frame 18 since moving the guiding means 14 to a radially outward position allows more space for operating and aligning such step ladder 30.

Although the guiding means 14 described with regard to Figs. 4 to 7 are embodied by struts 24, the guiding means 14 could also be embodied using panels 23 as depicted at platform 12 in Fig. 2. Vice versa, the guiding means 14 located at platform 11 may also comprise a housing 20 having panels 23 instead of struts 24.

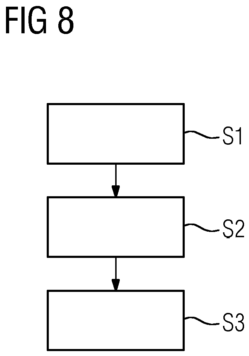

Fig. 8 shows a flowchart illustrating a method for transporting cargo 9 inside a wind turbine 1 which has a nacelle 3 mounted on top of a tower 2.

In a step S1, cargo 9 is lifted to a lift landing platform 7 of the tower 2. This may be done by a lift 8 which is configured to lift the cargo 9 from a landing platform 10 of the wind turbine 1 to the lift landing platform 7.

After the cargo 9 has reached the lift landing platform 7 by means of the lift 8, the cargo 9 may be rolled or otherwise manually moved into a position from which the cargo 9 can be further transported by a hoisting device 13.

In a step S2, the cargo 9 which has been lifted to the lift landing platform 7 is hoisted into the nacelle 3 of the wind turbine 1. For this purpose, the hoisting device 13 which is mounted in the nacelle 3 comprises a hoist rope 27 and a winch 28 capable of reeling in and out the hoist rope 27 for lifting or lowering the cargo 9.

Since the bed frame 18 of the nacelle 3 comprises a hatch 19 and also further platforms 11 and 12, which might optionally be arranged between the nacelle 3 and the lift landing platform 7, each comprise an opening 17 for allowing passing of the cargo 9 when hoisted, the cargo 9 can reach the nacelle 3.

In a step S3, a lateral movement of the cargo 9 is limited during hoisting by guiding means 14. The guiding means 14 are arranged at the lift landing platform 7, at the at least one further platform 11 and/or 12. Moreover, the guiding means may also be provided at the lift landing platform 7 and/or at the bed frame 18 of the nacelle. Since each of the guiding means 14 is configured to limit a lateral movement of the cargo 9 when hoisted, the cargo may not swing during the complete hoisting process and hence, damages to the tower 2 of the wind turbine 1 and the cargo 9 may be prevented.

Although the present invention has been described in accordance with preferred embodiments, it is obvious for the person skilled in the art that modifications are possible in all embodiments.

## Claims

1. A wind turbine (1) comprising:
a tower (2),
a nacelle (3) mounted on top of the tower (2),
a lift landing platform (7) mounted inside the tower (2),
a lift (8) configured to lift cargo (9) to the lift landing platform (7),
a hoisting device (13) mounted to the nacelle (3) and configured to hoist cargo (9) lifted to the lift landing platform (7) into the nacelle (3), and
guiding means (14) configured to limit a lateral movement (L) of the cargo (9) when hoisted.

2. The wind turbine (1) according to claim 1, wherein
the guiding means (14) comprise a housing (20) with an open bottom (21) and open top (22).

3. The wind turbine (1) according to claim 2, wherein the housing (20) has three or four side walls (23, 24).

4. The wind turbine (1) according to claim 2 or 3, wherein the housing (20) is made of struts (24), panels (23) and/or a mesh.

5. The wind turbine (1) according to one of claims 1 to 4, comprising at least one further platform (11, 12) arranged between the nacelle (3) and the lift landing platform (7), the at least one further platform (11, 12) having an opening (17) through which the cargo (9) passes when hoisted.

6. The wind turbine (1) according to one of claims 1 to 5, wherein the guiding means (14) are arranged at the lift landing platform (7) and/or the at least one further platform (11, 12).

7. The wind turbine (1) according to claim 5 or claim 6, wherein the guiding means (14) are arranged above or below the at least one further platform (11, 12).

8. The wind turbine (1) according to one of claims 5 to 7, wherein the guiding means (14) are moveably arranged, at the at least one further platform (11, 12), between a radially inward and a radially outward position.

9. The wind turbine (1) according to claim 8, further comprising a plate (29) configured to move along with the guiding means (14) so as to cover a portion of the opening (17) in the at least one further platform (11, 12) when the guiding means (14) are in the radially outward position.

10. The wind turbine (1) according to one of claims 1 to 9, wherein the lift (8) is configured as a service lift and/or the lift (8) is configured to lift the cargo (9) from a landing platform (10) of the wind turbine (1) to the lift landing platform (7).

11. The wind turbine (1) according to one of claims 1 to 10, wherein the hoisting device (13) comprises a hoist rope (27) and a winch (28) capable of reeling in and out the hoist rope (27) for lifting or lowering the cargo (9).

12. The wind turbine (1) according to one of claims 1 to 11, wherein the nacelle (3) comprises a bed frame (18) having a hatch (19) through which the cargo (9) passes when hoisted, wherein the bed frame (18) together with the nacelle (3) is configured to rotate relative to tower (2).

13. The wind turbine (1) according to claim 12, wherein the at least one further platform (11, 12) is a yaw platform (11) arranged underneath the bed frame (18), the yaw platform (11) being fastened to a tower adaptor (25) and the tower adaptor (25) being connected to the bed frame (18) via yaw bearings (26) allowing the rotation of the nacelle (3) relative to the tower (2).

14. The wind turbine (1) according to one of claims 1 to 13, comprising a first and a second further platform (11, 12) between the nacelle (3) and the lift landing platform (7), each further platform (11, 12) comprising an opening (17) for passing the cargo (9) when hoisted, the first further platform (11), the second further platform (12) and/or the lift landing platform (7) having guiding means (14) associated therewith, the or each guiding means (14) being configured to limit a lateral movement (L) of the cargo (9) when hoisted.

15. A method for transporting cargo (9) inside a wind turbine (1), the wind turbine (1) having a nacelle (3) mounted on top of a tower (2), the method comprising the steps of:
lifting cargo (9) to a lift landing platform (7) inside the tower (2),
hoisting the cargo (9) lifted to the lift landing platform (7) into the nacelle (3), and
limiting, by guiding means (14), a lateral movement (L) of the cargo (9) during hoisting.
